# EUROPÄISCHE PATENTSCHRIFT

(11) **EP 0 686 338 B1**
(45) Veröffentlichungstag und Bekanntmachung des Hinweises auf die Patenterteilung: **06.12.2000**
(21) Anmeldenummer: 95904035.3
(22) Anmeldetag: 19.12.1994
(51) Int. Cl.: H04Q 7/38

(54) **ZELLULARES MOBILFUNKSYSTEM MIT VERBESSERTER VERBINDUNGSÜBERGABE**
CELLULAR MOBILE RADIO SYSTEM WITH IMPROVED HANDOVER
SYSTEME RADIOTELEPHONIQUE CELLULAIRE MOBILE A TRANSFERT DE COMMUNICATIONS AMELIORE

(30) Priorität: 24.12.1993 DE 4344454
(43) Veröffentlichungstag der Anmeldung: 13.12.1995
(73) Patentinhaber: LUCENT TECHNOLOGIES INC., Murray Hill, New Jersey 07974-0636 (US)
(72) Erfinder: SÖLLNER, Michael, D-91058 Erlangen (DE)
(74) Vertreter: Buckley, Christopher Simon Thirsk
(86) Internationale Anmeldenummer: NL9400322
(87) Internationale Veröffentlichungsnummer: WO9518513

(56) Entgegenhaltungen:
- EP-A- 0 570 643
- DE-A- 2 625 475
- DE-U- 9 300 044

## Beschreibung

Die Erfindung bezieht sich auf ein Mobilfunksystem mit den Merkmalen des Oberbegriffs des Anspruchs 1.

Ein solches Mobilfunksystem ist aus der EP-A-0 570 643 bekannt.

Bei einem Schnurlostelefonsystem (EP-A-0 544 457) ist es im Zusammenhang mit mehreren Vermittlungsanlagen und Funkvermittlungseinheiten sowie mit jeweils mindestens einer Basisstation bekannt, mobile Endgeräte genau jeweils einer 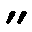 originären" Funkvermittlungseinheit mit einer Endgeräteindividuellen Identifizierungsinformation zuzuordnen. Die Fernmeldeverbindungen werden unabhängig vom Ort des an der jeweiligen Fernmeldeverbindung beteiligten mobilen Endgeräts hergestellt, und zwar über die diesem Endgerät zugeordnete originäre Funkvermittlungseinheit hergestellt. Bei diesem System wird eine Umkehrschleife zwischen der originären Vermittlungsanlage und der originären Funkvermittlungseinheit gebildet, wenn das mobile Endgerät außerhalb des Bereichs der originären Funkvermittlungseinheit gelangt. Die Umkehrschleife bleibt so lange bestehen, wie das mobile Endgerät außerhalb des Bereichs der originären Funkvermittlungseinheit arbeitet.

Bei einem Mobilfunksystem sind eine Vielzahl von Feststationen zur Unterhaltung von Funkverbindungen zu beweglichen Teilnehmergeräten vorgesehen. Eine im folgenden auch als Koppelanordnung bezeichnete Vermittlungseinrichtung dient zur Herstellung von Verbindungen zu den der Koppelanordnung zugeordneten Feststationen. Für eine Verbindungsübergabe (= handover) sind beispielsweise in der Koppelanordnung Mittel vorgesehen, die eine zwischen der Koppelanordnung und einer beweglichen Teilnehmerstation über eine erste Feststation (verbindungsabgebende Feststation) bestehende Verbindung im Bedarfsfall an eine zweite Feststation (verbindungsübernehmende Feststation) übergeben.

Moderne Mobilfunksysteme bestehen heutzutage aus vielen einzelnen Funkzellen mit jeweils begrenzter räumlicher Ausdehnung. Jede Zelle wird von einer Feststation funktechnisch versorgt, wobei die Sendeleistung der Feststationen und der beweglichen Teilnehmerstationen an die Größe einer Funkzelle angepaßt ist. Auf diese Weise können in Funkzellen, die einen bestimmten Abstand voneinander aufweisen, die gleichen Funkparameter (z. B. Frequenzen, Zeitschlitze oder Codecs) verwendet werden, ohne daß gegenseitige Störungen hingenommen werden müssen.

Während eine Feststation zu den in ihrer Zelle befindlichen beweglichen Teilnehmerstationen über einen Funkkanal jeweils Verbindung hält, sind die Feststationen selbst z.B. über leitungsgebundene Übertragungsstrecken mit Koppelanordnungen verbunden. Die Koppelanordnungen ihrerseits sind wiederum mit mindestens einem Festnetz, beispielsweise dem öffentlichen Fernsprechnetz (PSTN = Public Switched Telephone Network oder ISDN = Integrated Digital Services Network) verbunden. Mittels der Koppelanordnungen kann eine bewegliche Teilnehmerstation mit einem beliebigen Teilnehmer des jeweiligen Netzes (sogenannter "mobile originating call") bzw. ein Teilnehmer des jeweiligen Netzes mit einem beliebigen Teilnehmer des Mobilfunknetzes (sogenannter "mobile terminating call") verbunden werden. Bei einer solchen Verbindung kann es sich in herkömmlicher Weise um eine Gesprächsverbindung aber auch um eine Datenverbindung, beispielsweise für eine Facsimile-Übertragung handeln.

Sobald sich eine bewegliche Teilnehmerstation aus dem Versorgungsbereich einer ihr gerade zugeordneten Funkzelle entfernt, muß dafür Sorge getragen werden, daß die Funkverbindung zu der beweglichen Teilnehmerstation von einer anderen Funkzelle, d.h. von einer anderen Feststation übernommen wird. Das Vorliegen eines solchen Funkzellenwechsels kann beispielsweise durch Messungen der Signalfeldstärke, des Signalrauschabstandes, der Fehlerwahrscheinlichkeit, der Entfernung zwischen Feststation und beweglichen Teilnehmergerät, usw. festgestellt werden. Wird eine solche Situation erkannt, so muß sowohl die Funkverbindung von der einen Feststation an die übernehmende Feststation übergeben werden, als auch der Übertragungsweg zwischen netzseitigem Teilnehmer und der verbindungsabgebenden Feststation zur verbindungsübernehmenden Feststation umgeschaltet werden.

Bei einem Verfahren zur Gesprächsübergabe, das beispielsweise in einem GSM-System Anwendung findet, muß an der verbindungsübernehmenden Feststation zunächst ein freier Funkkanal ausgewählt werden. Dieser Kanal wird der beweglichen Teilnehmerstation mitgeteilt, damit die bewegliche Teilnehmerstation auf dem ihr genannten Funkkanal die Funkverbindung weiterführen kann. Bei anderen Systemen, z.B. bei DECT (Digital European Cordless Communication) erfolgt die Auswahl des neuen Funkkanals durch die Mobilstation.

Mit dem Wechsel der Mobilstation auf den neuen Funkkanal muß auch die Verbindung im leitungsgebundenen Teil des Mobilfunksystems durch entsprechende Ansteuerung der beteiligten Koppelanordnungen umgeschaltet werden. Hierbei besteht das Problem, daß die Umschaltung des Funkkanals und die Umschaltung der Koppelanordnungen möglichst gleichzeitig erfolgen soll, so daß keine, beispielsweise durch Knackgeräusche wahrnehmbaren Unterbrechungen oder gar längere Pausen auftreten.

Hierzu ist unter anderem auch schon vorgeschlagen worden, eine Konferenzschaltung des beweglichen Teilnehmers mit sich selbst und zwar zum einen über die verbindungsabgebende Feststation und zum anderen über die verbindungsübernehmende Feststation aufzubauen, so daß unabhängig vom Umschaltzeitpunkt stets eine Verbindung zum beweglichen Teilnehmer besteht. Der Aufwand für solche Konferenzschaltungen ist jedoch nicht unerheblich. Außerdem besteht das Problem, daß vor der Umschaltung des Funkkanals von der verbindungsübernehmenden Feststation bzw. nach Umschalten des Funkkanals von der verbindungsübergebenden Feststation durch die jeweils noch nicht oder nicht mehr bestehende Funkverbindung ein Rauschsignal eingekoppelt wird. Dies ist zwar bei Gesprächsverbindungen tolerierbar, kann aber bei Datenverbindungen zu nicht korrigierbaren Fehlern führen.

Aus EP 0 544 457 ist ein Verfahren zur Behandlung einer Gesprächsübergabe von einer ersten Feststation zu einer zweiten Feststation bekannt, bei dem vor der Umschaltung der Funkkanäle die Verbindung vom Festnetzteilnehmer zur Koppelanordnung zunächst über einen eigens für die Gesprächsübergabe vorgesehenen Umschalter geführt wird. Zur Vorbereitung der Gesprächsübergabe wird von diesem Umschalter über die Koppelanordnung, an der die verbindungsübernehmende Feststation angeschlossen ist, einschließlich des Bereitstellens des neuen Funkkanals an der verbindungsübernehmenden Feststation der Verbindungsweg vollständig aufgebaut. Nach Aufbau dieser Verbindung wird von der übergebenden Peststation die bewegliche Teilnehmerstation angewiesen, auf den Funkkanal der verbindungsübernehmenden Feststation zu wechseln. Gleichzeitig wird der Umschalter veranlaßt, auf die bereits vorbereitete neue Verbindung umzuschalten. Anschließend kann die alte Verbindung über den Umschalter zu der verbindungsübernehmenden Feststation abgebaut werden.

In einer speziellen Ausführungsform, bei der die (Gesprächs-) Daten als komprimierte Zeitschlitzsignale vorliegen, ist der Umschalter als eine Einheit zur Zeitschlitzvertauschung ausgeführt. Der Vorteil des Umschalters liegt darin, daß vor der eigentlichen Gesprächsübergabe bereits alle Verbindungen vorbereitet sind und so zur Umschaltung auf der Netzwerkseite nur diese Umschaltung, d.h. eine entsprechende Vertauschung der Zeitschlitzsignale vorgenommen werden muß. Sobald ein entsprechendes Steuersignal an diesem Umschalter ankommt, kann die Umschaltung verzögerungsfrei erfolgen. Auf diese Weise soll die Zeitdauer innerhalb der die Verbindung von und zur beweglichen Teilnehmerstation unterbrochen ist, weniger als 150 msec betragen.

Diese Umschaltzeit mag für Gesprächsverbindungen durchaus hingenommen werden. Bei Datenübertragungen hingegen kann eine Umschaltzeit in dieser Größenordnung nicht mehr akzeptiert werden.

Der Erfindung liegt die Aufgabe zugrunde, die durch eine Gesprächsübergabe bedingten Unterbrechungszeiten möglichst klein zu halten.

Diese Aufgabe wird dadurch gelöst, daß die erste und die weitere Feststation eine insbesondere in der Feststation angeordnete Koppeleinrichtung zur Einkopplung eines von der Vermittlungseinrichtung kommenden Signals in das zur Vermittlungseinrichtung gehende Signal aufweisen.

Der Erfindung liegt die Erkenntnis zugrunde, daß weniger die Schaltzeiten innerhalb der einzelnen Anlagenteile des Mobilfunksystems für eine Gesprächsübergabe problematisch sind, sondern größere Unterbrechungen dadurch bedingt sind, daß zwischen dem Erkennen der Notwendigkeit der Betätigung der Koppelanordnung (= Vermittlungseinrichtung) und der Ausführung Schaltbefehle mit einer endlichen Verzögerung übertragen werden müssen. Da nicht alle an einer Koppelanordnung ankommenden Schaltbefehle sofort ausgeführt werden können, sondern beispielsweise in eine Warteschlange eingereiht werden, ist die Länge dieser Verzögerungszeit auch von anderen Faktoren, beispielsweise der Verkehrsbelastung der Koppelanordnung abhängig. Die Verzögerungszeit kann somit erheblich variieren und kann unter Umständen auch größer als 150 ms sein. Prinzipiell ist es für die Funktion der Erfindung ohne Belang, an welcher Stelle zwischen Koppelanordnung und beweglicher Teilnehmerstation die Koppeleinrichtung (= Koppelmittel) angeordnet ist. Auch eine Plazierung der Koppelmittel an der Koppelanordnung ist möglich, solange die Bedingung eingehalten wird, daß die Koppelmittel bei einer Gesprächsübergabe zu einem definierten Schaltzeitpunkt geschaltet werden. Eine vorteilhafte Ausgestaltung der Erfindung sieht aber vor, die Mittel zur Einkoppelung eines vom Festnetz kommenden Signals in das zum Festnetz gehende Signal in der Feststation vorzunehmen. In einer weiteren Ausgestaltung sind die Mittel zur Detektion einer Gesprächsübergabe, die die Mittel zur Einkoppelung steuern, ebenfalls in der Feststation untergebracht. Auf diese Weise können die notwendigen Eingriffe in ein bestehendes Mobilfunksystem möglichst gering gehalten werden.

Die von der Erfindung vorgeschlagene Koppeleinrichtung (= Koppelmittel) kann so ausgestaltet werden, daß sie bei einem Umschalten des Funkkanals ebenfalls möglichst verzögerungsfrei ihre Schaltvorgänge ausführt. Der Erfindung liegt die Idee zugrunde, zeitkritische Schaltvorgänge von dem im verbindungsabgebenden Leitungszweig und im verbindungsübernehmenden Leitungszweig liegenden Koppelmittel selbsttätig in der Weise ausführen zu lassen. Auf diese Weise wird der Umschaltvorgang während einer Gesprächsübergabe in mehrere Teilphasen aufgegliedert, wobei zeitkritische Teilphasen von den Koppelmitteln erledigt werden, die Umschaltung der Koppelanordnung jedoch in unkritische Teilphasen verlegt wird.

Zur Ausführung der Erfindung kommt es darauf an, die Koppelmittel möglichst zeitgleich mit einer Gesprächsübergabe, d.h. mit dem tatsächlichen Funkkanalwechsel zu betätigen. Es ist daher vorteilhaft, zur Erkennung einer Gesprächsübergabe eigene Mittel zur Detektion der Gesprächsübergabe vorzusehen, um unmittelbar, d.h. ohne zeitliche Verzögerung auf die Koppelmittel einzuwirken. Vorzugsweise sind Koppelmittel und Detektormittel örtlich beieinander anzuordnen, so daß für das Schaltsignal vom Detektor zum Koppelmittel keine zusätzliche Signalisierung über eine Übertragungsstrecke benötigt wird.

Die Steuerung einer Gesprüchsübergabe kann dadurch sichergestellt werden, daß die Koppeleinrichtung eine Detektions- und Steuereinrichtung zur Detektion eines Gesprächsübergabewunsches und zur Steuerung der Einkopplung aufweist. Ein Funkkanalwechsel des beweglichen Teilnehmers kann beispielsweise dadurch festgestellt werden, daß in der verbindungsabgebenden Feststation vom beweglichen Teilnehmer kein Signal mehr eintrifft, beziehungsweise in der verbindungsübernehmenden Feststation ein Signal empfangen wird. Zur Feststellung des Signalempfangs eignen sich bei digitalen Funksystemen insbesondere Messungen der Empfangfeldstärke und/oder der Bitfehlerrate.

Die Einkopplung des von der Vermittlungseinrichtung kommenden Signals in das zur Vermittlungseinrichtung gehende Signal kann auf einfache Weise dadurch erfolgen, daß die Koppeleinrichtung Schaltmittel zur seriellen Verbindung der ersten und der weiteren Feststation aufweist. Durch diese serielle Verbindung der ersten und der weiteren Feststation wird es möglich, eine nahezu nahtlose Gesprüchsübergabe nur durch Maßnahmen, die im Bereich der Netzwerkinfrastruktur des Mobilfunksystems liegen, zu ermöglichen, d.h. es sind beispielsweise lediglich die Feststationen entsprechend zu modifizieren, während auch mit bereits vorhendenen Teilnehmerstationen ein nahezu nahtloser Handover möglicxh ist, Modifikationen bei den Teilnehmerstationen also nicht erforderlich sind.

Prinzipiell gibt es verschiedene Möglichkeiten, einschließlich zusätzlicher Schaltmittel an der Koppelanordnung, die nunmehr zeitunkritischen Schaltvorgänge an der Koppelanordnung durchzuführen. Als besonders vorteilhaft sieht die Erfindung an, daß die Vermittlungseinrichtung Schaltmittel aufweist, die zum getrennten Durchschalten des von der Vermittlungseinrichtung kommenden und des zur Vermittlungseinrichtung gehenden Signals bei der Durchführung einer Gesprächsübergabe vorgesehen sind. Hierdurch werden zur Durchführung einer Gesprächsübergabe kommende und gehende Verbindung innerhalb der Koppelanordnung getrennt voneinander geschaltet, so daß keine zusätzlichen Schaltmittel an der Koppelanordnung benötigt werden, sondern es ist nur eine entsprechende Änderung des Betriebsprogramms der Koppelanordnung erforderlich. Die sonst übliche paarweise Verbindungsumschaltung in einer Koppelanordnung wird beispielsweise in zwei einzelne Schaltvorgänge aufgelöst. Vor der endgültigen (paarweisen) Umschaltung wird als Vorbereitung zur Gesprächsübergabe eine ankommende Übertragungsleitung des einen Leitungszweigs (beispielsweise der von der verbindungsabgebenden Feststation kommende Leitungszweig) mit der abgehenden Übertragungsleitung des anderen Leitungszweiges (beispielsweise der zur verbindungsübernehmenden Feststation gehende Leitungszweig) verbunden. Auf diese Weise wird innerhalb der Koppelanordnung eine Schleife zwischen verbindungsabgehenden und verbindungsübernehmenden Leitungszweig geschlossen.

Ein vorteilhafte mehrstufige Gesprächsübergabe kann dadurch erfolgen, daß die Schaltmittel der Vermittlungseinrichtung und die Schaltmittel der Koppeleinrichtung der weiteren Feststation vorgesehen sind, in einem ersten Schritt ein vom Festnetz kommendes, zu einer Mobilstation zu übertragendes Sendesignal nach einem Verbindungsübergabewunsch über die weitere Funkstation zur ersten Feststation durchzuschalten, daß die Schaltmittel der Koppeleinrichtung der ersten und der weiteren Feststaion vorgesehen sind, in einem zweiten Schritt ein von der Mobilstation empfangenes Empfangssignal zur Verbindungsübergabe über die erste Funkstation zur weiteren Feststation durchzuschalten und daß die Schaltmittel der Vermittlungseinrichtung vorgesehen sind, in einem dritten Schritt das von der Mobilstation empfangene Empfangssignal an das Festnetz durchzuschalten.

Die Erfindung wird nun anhand der in den Zeichnungen dargestellten Ausführungsbeispiele näher beschrieben und erläutert.

Es zeigen:
- Fig. 1a, b, c: ein Ausführungsbeispiel eines Mobilfunksystems mit drei verschiedenen Phasen einer Gesprächsübergabe,
- Fig. 2: den strukturellen Aufbau eines zellularen Mobilfunksystems,
- Fig. 3: ein Ausführungsbeispiel einer Feststation für ein Mobilfunksystem,
- Fig. 4: den schematischer Aufbau einer Signalprozessoreinheit einer Feststation und
- Fig. 5a bis 5g: eine schematisierte Darstellung eines weiteren Ausführungsbeispiels eines Mobilfunksystems mit verschiedenen Phasen einer Gesprächsübergabe.

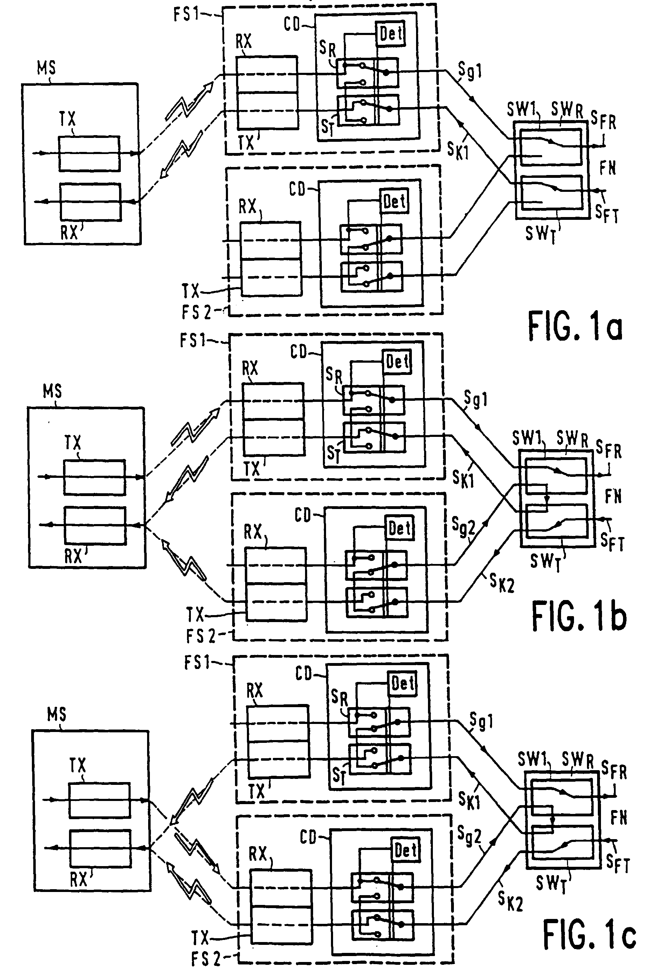

Fig. 1a, 1b, 1c zeigen ein Ausführungsbeispiel eines Mobilfunksystems mit drei verschiedenen Phasen einer Gesprächsübergabe. Das in den Fig. 1a, 1b, 1c gezeigte Mobilfunksystem besteht aus einer ersten Feststation FS1, aus einer weiteren Feststation FS2, aus einer Vermittlungseinrichtung SW1 sowie aus einer Mobilstation MS. Bei dem in den Fig. 1a, 1b, 1c dargestellten Ausführungsbeispiel sind lediglich die für die Erfindung relevanten Teile des Mobilfunksystems dargestellt. So sind die Sendeteile der Mobilstation sowie der ersten und der weiteren Feststationen FS1, FS2 mit dein Bezugszeichen TX bezeichnet, während die Empfangsteile mit RX bezeichnet sind. Die erste und die weitere Feststation FS1, FS2 weisen darüber hinaus jeweils eine Koppeleinrichtung CD mit Schaltmitteln S_{R}, S_{T} sowie eine Detektions- und Steuereinrichtung Det zur Steuerung der Schaltmittel S_{R}, S_{T} auf. Die Vermittlungseinrichtung SW1 weist Schaltmittel SW_{R}, SW_{T} auf, die zum getrennten Durchschalten des von einem Festnetz FN kommenden Sendesignals S_{FT} bzw. eines an das Festnetz übertragenen Empfangssignals S_{FR} vorgesehen sind. Eine von der Vermittlungseinrichtung SW1 zur ersten Feststation FS1 kommendes Signal ist mit Sₖ₁ bezeichnet, während das von der ersten Feststation FS1 zur Vermittlungseinrichtung SW1 gehende Signal mit S_{g1} bezeichnet ist. Entsprechend sind die Signale in Fig. 1b bzw. Fig. 1c zwischen der weiteren Feststation FS2 und der Vermittlungseinrichtung SW1 mit S_{g2} und Sₖ₂ bezeichnet.

Ziel der in der ersten Feststation FS1, in der weiteren Feststation FS2 sowie in der Vermittlungseinrichtung SW1 vorgesehenen Schaltmittel S_{R}, S_{T}, SW_{R}, SW_{T}, SW_{RT} ist es, eine serielle Verbindung der ersten FS1- und der weiteren FS2-Feststation herzustellen. Dabei soll ein getrenntes Durchschalten des von der Vermittlungseinrichtung SW1 kommenden Signals Sₖ und des zur Vermittlungseinrichtung SW1 gehenden Signals S_{g} bei der Durchführung einer Gesprächsübergabe erfolgen. Hieraus resultiert eine mehrstufige Umschaltung bei der Gesprächsübergabe, die im folgenden mit Hilfe der verschiedenen in der Fig. 1a bis 1c dargestellten Umschaltphasen erläutert werden.

Fig. 1a zeigt die Phase, daß sich die Mobilstation MS im Bereich der einer ersten Zelle zurgeordneten ersten Feststation FS1 befindet. Daher sind die Schaltmittel SW_{R}, SW_{T} der Vermittlungseinrichtung SW1 so geschaltet, daß das für die Mobilstation MS bestimmte, vom Festnetz FN kommende Sendesignal S_{FT} als kommendes Signal Sₖ₁ an den Sender TX der ersten Feststation FS1 geschaltet wird. Der Sender TX der ersten Feststation FS1 sendet dieses Signal zur Mobilstation MS aus, was durch den zur Mobilstation MS gerichteten Pfeil symbolisiert ist. Für die umgekehrte Übertragungsrichtung gilt das Gleiche, d.h. ein vom Sender TX der Mobilstation MS ausgesendetes Sendesignal wird von der ersten Feststation FS1 über den Empfänger RX empfangen und als gehendes Signal S_{g1} sowie über die Vermittlungseinrichtung SW1 als Empfangssignal S_{FR} an das Festnetz FN weitergeleitet.

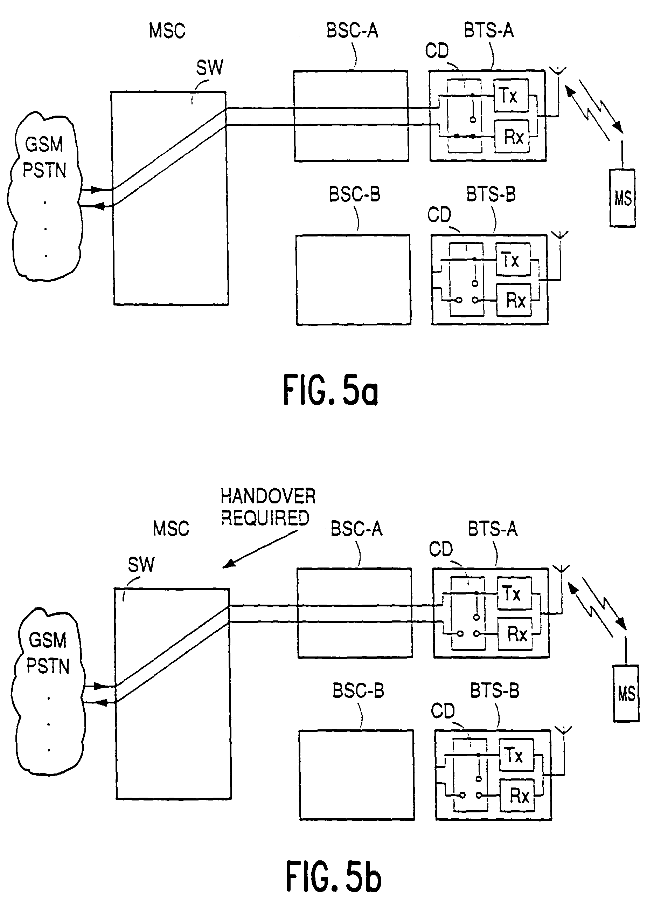

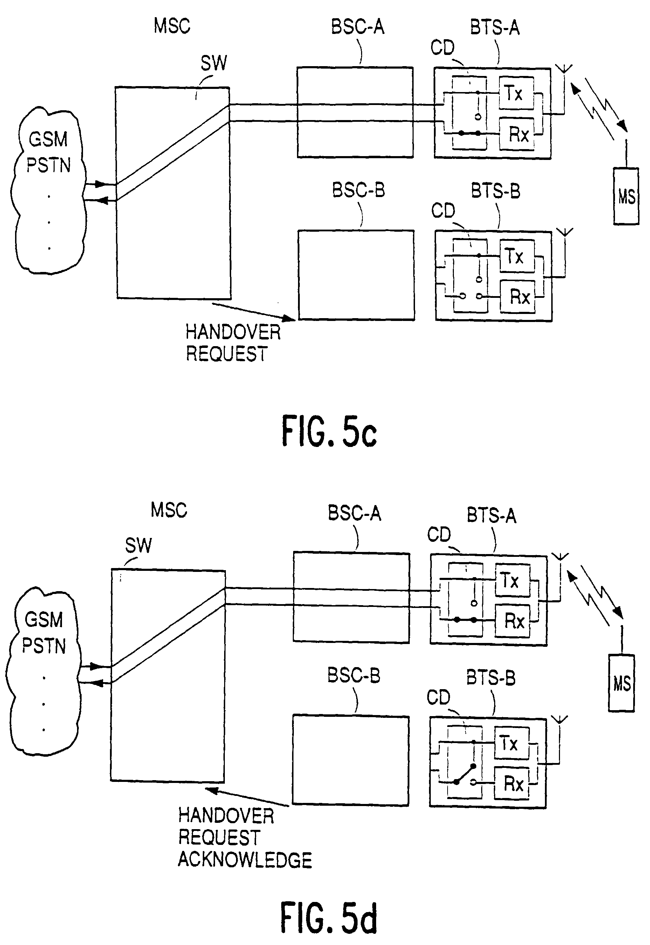

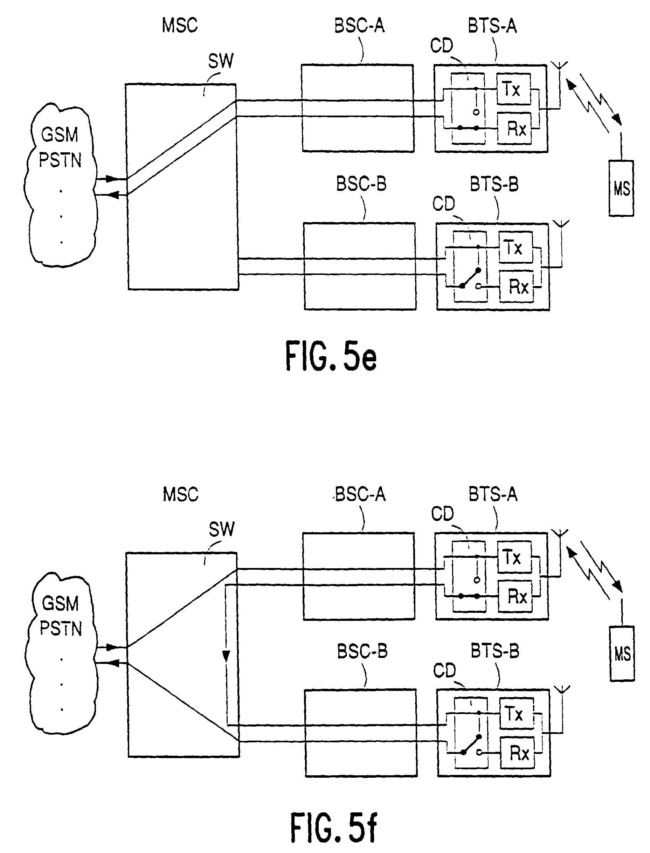

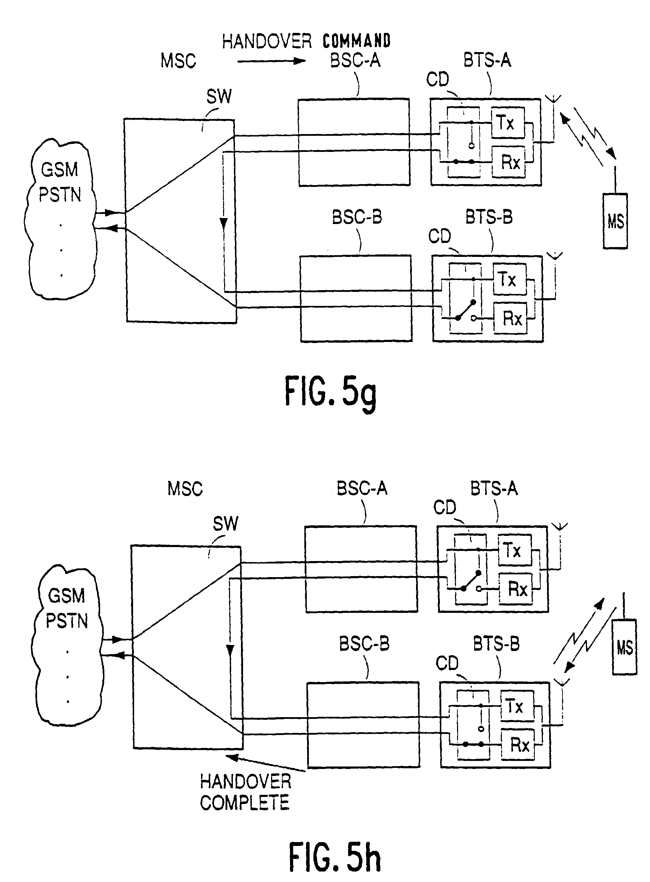

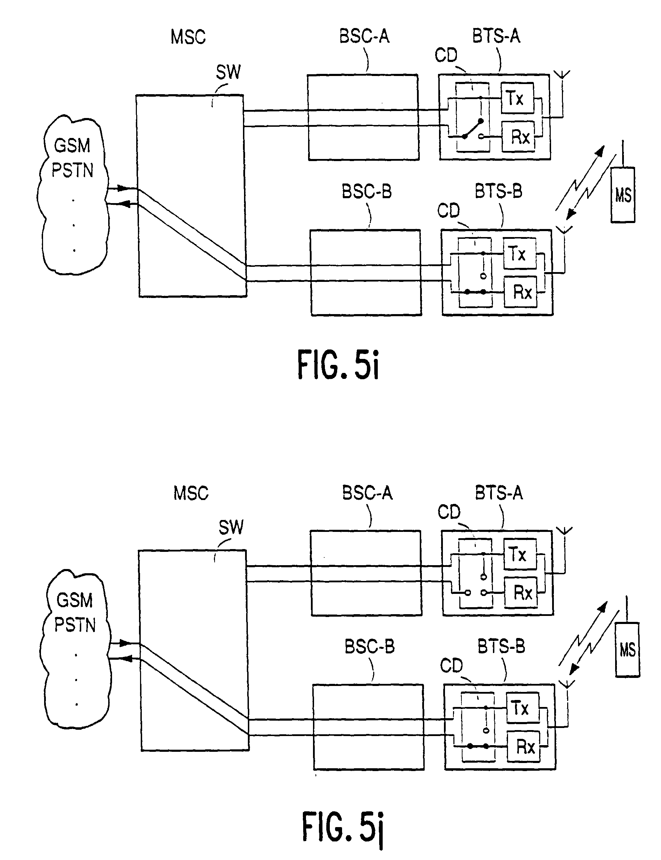

Bewegt sich nun die Mobilstation MS allmählich aus dem Bereich der Zelle, die von der ersten Feststation FS1 versorgt wird in Richtung der Zelle, die von der weiteren Feststation FS2 versorgt wird, so wird beispielsweise aufgrund eines Kommandos "hand over required", wie dies im Zusammenhang mit den Fig. 5 beschrieben ist, in der Vermittlungseinrichtung SW1 das vom Festnetz kommende Sendesignal S_{FT} nicht mehr direkt an die erste Feststation FS1 geleitet, sondern die Schaltmittel SW_{T}, SW_{RT} sind so geschaltet, daß das Sendesignal S_{FT} als von der Vermittlungseinrichtung SW1 kommendes Signal Sₖ₂ an die weitere zentrale Funkeinrichtung FS2 weitergeleitet wird, wobei die Schaltmittel S_{T}, S_{R} der Koppeleinrichtung CD der weiteren Feststation FS2 so geschaltet sind, daß Sendesignal S_{FT} sowohl an den Sender TX der weiteren Feststation FS2, als auch als gehendes Signal S_{g2} an die Vermittlungseinrichtung SW1 weitergeleitet wird. Das Schaltmittel SW_{RT} der Vermittlungseinrichtung SW1, leitet dieses Signal als kommendes Signal S_{K1} an den Sender TX der ersten Feststation FS1 weiter. In der in Fig. 1b dargestellten Phase der Gesprächsübergabe besteht somit für das Sendesignal S_{FT} eine serielle Verbindung der ersten und der weiteren Feststation FS1, FS2.

Fig. 1c zeigt die Serienschaltung der Feststationen FS1, FS2 während der Gesprächsübernahme, nachdem die Mobilstation auf die weitere Feststation FS2 umgeschaltet hat. In diesem Betriebszustand wird das vom Festnetz FN kommende Sendesignal S_{FT} als kommendes Signal Sₖ₂ zum Sender TX der weiteren Feststation FS2 durchgeschaltet und von diesem an die Mobilstation ausgesendet. Das vom Sender TX der Mobilstation MS an die weitere Feststation FS2 ausgesendete Signal wird von der Empfangseinrichtung RX der weiteren Feststation FS2 empfangen und über das Schaltmittel SR der Koppeleinrichtung CD als zur Vermittlungseinrichtung gehendes Signal S_{g2} zur Vermittlungseinrichtung SW1 und über das Schaltmittel SW_{RT} als von der Vermittlungseinrichtung kommendes Signal Sₖ₁ an die erste Feststation FS1 durchgeschaltet. Die Schaltmittel S_{T}, S_{R} der Koppeleinrichtung CT der ersten Feststation FS1 sind so geschaltet, daß dieses Signal Sₖ₁ als zur Vermittlungseinrichtung gehendes Signal S_{g1} von der ersten Feststation FS 1 an die Vermittlungseinrichtung SW1 weitergeleitet wird und von dieser über das Schaltmittel SW_{R} als Empfangssignal S_{FR} ans Festnetz weitergeleitet wird. In einem letzten Schritt wird das Schaltmittel SW_{RT} sowie das Schaltmittel SW_{R} der Vermittlungseinrichtung SW1 so geschaltet, daß das von der weiteren Feststation FS2 zur Vermittlungseinrichtung SW1 gehende Signal S_{g2} direkt als Empfangssignal S_{FR} ans Festnetz FN geschaltet wird. Dies ist in den Fig. 1a bis 1c nicht mehr speziell dargestellt.

Das in den Fig. 1a bis 1c vorgestellt Prinzip einer Gesprächsübergabe (Handover) kann auch bei bestehenden Mobilstationen durchgeführt werden, da keine Modifikationen der Mobilstationen erforderlich sind. Modifikationen für einen derartigen Handover sind lediglich in der Netzwerkinfrastruktur erforderlich, damit die an einem Handover beteiligt sind, in eine serielle Verbindung geschaltet werden können. Diese serielle Verbindung besteht aus einem Duplexkanal, der getrennt für Sende- und Empfangsrichtung geschaltet werden kann und so die gleiche Information an alle beteiligten Feststationen liefert. Die in den Fig. 1a bis 1c vorgeschlagene Netzwerkkonfiguration wird dynamisch in einigen Netzwerkknoten (Koppeleinrichtung CD, Vermittlungseinrichtung SW1) durch konventionelle Einwegeschalter durchgeführt. Im Vergleich zu bisherigen Netzwerkkonfigurationen ist somit lediglich die Koppeleinrichtung CD mit den Schaltmitteln S_{R}, S_{T} erforderlich, die das Durchschalten der Downlink- und der Uplink-Richtung in den Feststationen FS1, FS2 ermöglichen. Hierdurch wird die Feststation FS1 transparent für Daten, die vom Netzwerk geliefert werden.

Mit der in den Fig. 1a bis 1c vorgeschlagenen Konfiguration werden nach der Initialisierung eines Handovers alle Feststationen durch die selben "Downstream"-Daten gespeist, die dann auch den entsprechenden Downlinkkanälen angeboten werden können. Lediglich in der gerade bedienenden Feststation FS1 (Serving Radio Base Station) sind die Schaltmittel S_{R}, S_{T} in dieser Betriebsphase (vergleiche Fig. 1b) zwischen Downlink und Uplink geöffnet, damit in der ersten Feststation FS1 ein kontinuierliches Uplinksignal detektiert werden kann, das die übernehmende Feststation FS2 veranlaßt, die terrestrischen Kanäle mit den entsprechenden Funkkanälen zu verbinden.

Wenn die Mobilstation MS den Befehl erhält, auf den neuen Funkkanal der übernehmenden Feststation FS2 zu wechseln, kann sie auf diesen Kanal in entsprechender Weise synchronisiert oder unsynchronisiert zugreifen. In diesem Augenblick wird die abgebende Feststation FS1 das Signal der Mobilstation MS verlieren, was zur Folge hat, daß die Uplink-Downlink-Verbindung der Koppeleinrichtung CD der Feststation FS1 durchverbunden wird (vergleiche Fig. 1c). In der Zwischenzeit wird die frühere Zielfeststation detektieren, daß die Mobilstation MS den zugeordneten Kanal belegt und wird somit sofort die Kanäle durchschalten. Das Ergebnis dieser mehrstufigen verteilten Durchschalteoperation, wie dies in den Fig. 1a bis 1c dargestellt ist, ist ein sofortiger geschalteter Funkpfad ohne Verzögerungszeiten und ohne zweifelhafte Kombination von Kanälen. Insgesamt wird somit auch für Datenübertragungen die Übertragungsqualität durch den vorgeschlagenen Hand-over wesentlich verbessert.

Die Fig. 1a bis 1c zeigen einen Handover, der zwischen zwei Feststationen FS1, FS2 erfolgt, die beide derselben Vermittlungseinrichtung SW1 zugeordnet sind. Im Falle, daß ein Handover zwischen einer Feststation, einer ersten Vermittlungseinrichtung und einer Feststation, die einer weiteren Vermittlungseinrichtung zugeordnet ist, sind in den beteiligten Feststationen dieselben Schaltvorgänge wie bei dem in Fig. 1a bis 1c beschriebenen Ausführungsbeispielen notwendig. Lediglich in den beteiligten Vermittlungseinrichtungen der verbindungsabgebenden und der verbindungsübernehmenden Feststation sind in diesem Fall entsprechende Übertragungspfade zu schalten, damit das in den Fig. 1a bis 1c dargestellte Prinzip einer seriellen Verbindung der verbindungsabgebenden und der verbindungsübernehmenden Feststation ebenfalls erfolgen kann.

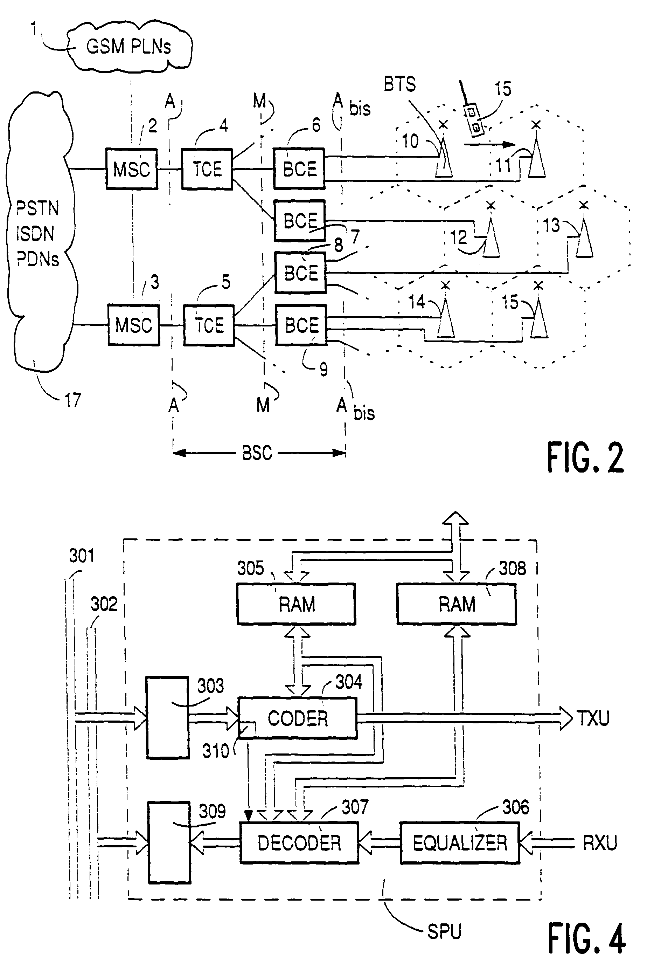

Fig. 2 zeigt die Struktur eines zellularen Mobilfunksystems. Als Ausführungsbeispiel wurde das in Europa bereits im Betrieb befindliche GSM-System (Global System for Mobile Communication) gewählt. Eine Übersicht über dieses Mobilfunksystem findet sich in der eingangs genannten EP 0 544 457. Da das GSM-Netz dem Fachman hinlänglich bekannt ist, wird bei der Beschreibung der Erfindung nur insoweit auf das GSM-Netz eingegangen, als es für das Verständnis der Erfindung notwendig ist. Im übrigen ist die Erfindung natürlich nicht nur auf das GSM-Netz beschränkt, sondern auch für alle anderen Mobilfunksysteme geeignet, bei denen eine Gesprächsübergabe (Handover) vorgesehen ist.

Das Skelett des GSM-Netzes wird gebildet aus Funkvermittlungsstellen 2,3 (MSC = Mobile Switching Center), welche untereinander über Datenleitungen verbunden sind. Die Funkvermittlungsstelle MSC ist eine digitale Vermittlungsstelle hoher Leistungsfähigkeit, die sowohl den Übergang zwischen dem GSM-Netz 1 und anderen Telekommunikationsnetzen, wie z.B. einem öffentlichen Telefonnetz 17 (PSTN), dem ISDN-Netz, usw. herstellt, als auch das GSM-Netz 1 verwaltet. An jeder Funkvermittlungsstelle MSC sind ein oder mehrere Funkstationssteuereinrichtungen (BSC = Base Station Controller) angeschlossen. Die Feststationssteuereinrichtung BSC wiederum verwaltet eine oder mehrere Feststationen 10 .. 15 (BTS = Base Tranceiver Station) wobei jede Feststation BTS eine Funkzelle funktechnisch versorgt. Zur Herstellung der entsprechenden Verbindungen zwischen der Funkvermittlungsstelle MSC und der jeweiligen Festatation BTS ist in jeder Feststationssteuereinrichtung BSC jeweils ein weiteres Koppelfeld vorgesehen. Für das Prinzip der Erfindung ist es nicht erforderlich, zwischen Funkvermittlungsstelle MSC und Funkstationssteuereinrichtung BSC zu unterscheiden.

Der Übergang von der Funkvermittlungsstelle MSC zur Feststationssteuereinrichtung BSC ist als sogenannte A-Schnittstelle genormt. Als Datenformat sieht die A-Schnittstelle das bekannte PCM30-Format vor, so daß zur Datenübertragung herkömmliche PCM30-Übertragungsstrecken benutzt werden können. Das PCM30-Signal ist ein Zeitmultiplexsignal, bei dem 30 Datensignale, beispielsweise digitalisierte Fernsprechsignale mit einer Datenrate von 64 Kbit/s zu einem Bitstrom von 2,048 Mbit/s zusammengefaßt werden. Der PCM30-Rahmen ist hierzu in 32 Zeitschlitze zu je 8 Bit unterteilt. Der erste Zeitschlitz (Nr. 0) enthält eine Kennzeichnung des Rahmenbeginns, der 17te Zeitschlitz (Nr. 16) wird für die Übertragung von Signalisierung der in den verbleibenden 30 Zeitschlitzen untergebrachten Datenkanäle verwendet.

Für die erste Aufbaustufe des GSM-Systems wurde eine Sprachkodierung gewählt, bei der basierend auf der bekannten LPC-Technik (LPC = linear predictive coding) in Verbindung mit einer Langzeitprädiktion (LTP = long term prediction) und einer Kodierung des Restsignals durch eine Folge von Pulsen in einem regelmäßigen Zeitraster (RPE = regular pulse exitation) für Sprachproben von jeweils 20 msec Dauer jeweils ein Datenblock mit 260 Bit gebildet wird. Dies entspricht einer Datenrate von genau 13,0 Kbit/s. Im leitungsgebundenen Fernsprechnetz hingegen ist für die digitale Übertragung von Sprechsignalen eine Pulscodemodulation (PCM) mit einer Datenrate von 64 Kbit/s üblich. Zur Umwandlung von PCM-Signalen in GSM-Signale und umgekehrt sind Transkodiereinrichtungen (TCE = Transcoder Equipment) vorgesehen. Die jeweils 260 zusammengehörigen Bits einer Sprachprobe von 20 ms werden im folgenden als Netto-Bits bezeichnet, weil Sie keine weiteren Informationen enthalten. Diese Netto-Bits werden mit zusätzlichen Steuerbits und nicht belegten Bits auf insgesamt 320 Bits erweitert und bilden einen sogenannten TRAU-Rahmen (TRAU = Transcoding Rate Adaption Unit). Die Datenrate des TRAU-Rahmens beträgt somit genau 16 Kbits/s.

Für den Einsatz der Erfindung ist es vorteilhaft, aber nicht zwingend notwendig, daß zwischen Koppeleinrichtung und den beteiligten Feststationen ein Typ von Nutzsignalcodierung verwendet wird.

Obwohl bei GSM die Transcodiereinrichtung 4, 5 (TCE = Transcoder Equipment) logischer Teil der Feststationssteuereinrichtung BSC ist, kann sie örtlich an verschiedenen Stellen, z.B. auch bei der jeweiligen Funkvermittlungsstelle MSC untergebracht werden. Auf den Übertragungsstrecken zwischen der Transkodiereinrichtung TCE und der zentralen Feststationssteuereinrichtung 6, .., 9 (BCE = Base Station Central Equipment), wird auf diese Weise nur noch ein Viertel der Übertragungskapazität benötigt, weil in jedem PCM30-Kanal mit 64 Kbit/s gleichzeitig vier TRAU-Signale mit 16 Kbit/s untergebracht werden. Da die Entfernung zwischen Funkvermittlungsstelle und zentraler Feststationssteuereinrichtung BCE bis zu mehreren 100 km betragen kann, können auf diese Weise Übertragungskosten eingespart werden.

Zur Datenübertragung zwischen der zentralen Feststationssteuereinrichtung BCE und den einzelnen Feststationen BTS (sog. A_{bis}-Schnittstelle) ist ebenfalls ein PCM30-Rahmen vorgesehen, wobei innerhalb des PCM30-Rahmens ebenfalls logische Unterkanäle gebildet sind, so daß für jeden Nutzkanal 16 Kbit/s Übertragungskapazität zur Verfügung stehen.

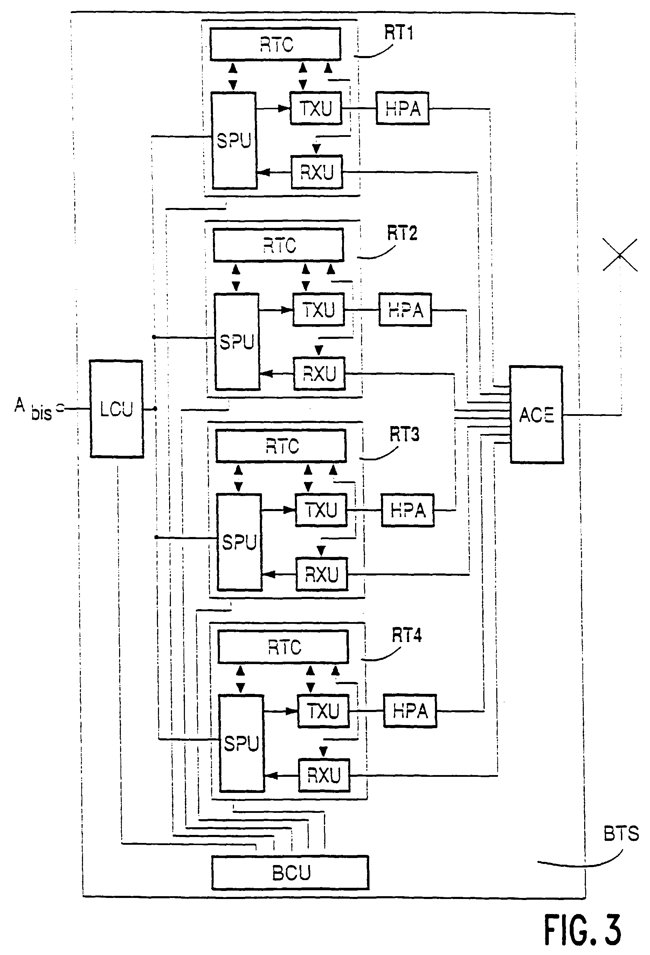

Fig. 3 zeigt den schematischen Aufbau einer Feststation BTS. In einem Verbindungskonzentrator LCU (Line Concentrator Unit) werden aus dem über die A_{bis} Schnittstelle kommenden Datenstrom Nutzsignale und Steuersignale voneinander getrennt. Über einen internen Datenbus der Feststation BTS werden die Nutzdaten auf einzelne Funkteile RT1 ... RT4 (RT= Radio Terminal) verteilt, wobei für jede Funkfrequenz ein eigener Funkteil RT vorgesehen ist. Da das GSM-System als TDMA-System mit jeweils acht Zeitschlitzen auf einer Frequenz konzipiert ist, kann ein Funkteil RT jeweils acht Übertragungskanäle bereitstellen. Eine im Funkteil RT angeordnete Signalprozessoreinheit SPU (Sigalling Processing Unit) bildet aus den jeweiligen Nutzdaten Zeitschlitzsendesignale, die in einem Sendeteil TXU (Transmitter Unit)einem ebenfalls im Sendeteil erzeugten HF-Träger aufmoduliert werden und gegebenenfalls in einer Leistungsendstufe HPA (High Power Amplifier) auf eine entsprechende Ausgangssendeleistung gebracht werden. Über eine Antennenkoppeleinrichtung ACE (Antenna Coupling Equipment) werden die Sendeausgangssignale aller Funkteile RT einer Feststation BTS zu einem einzigen Sendesignal zusammengefasst.

Die von einer Antenne empfangenen Signale werden im Empfängerteil RXU (Receiver Unit) des Funkteils RT frequenzselektiert und in komplexe, digitale Basisbandsignale umgewandelt. Die basisbandgewandelten Signale werden in der Signalprozessoreinheit SPU decodiert und zu einem fortlaufenden Datenstrom zusammengesetzt und über den internen Datenbus und den Verbindungskonzentrator LCU über die A_{bis}-Schnittstelle zur BCE übertragen (vgl. Fig.2).

Das Empfangsteil RXU mißt außerdem die jeweilige Empfangsfeldstärke des Empfangssignals und leitet die gemessene Empfangsfeldstärke an eine Funksteuereinrichtung RTC (Radio Terminal Controller) weiter. Bei der Dekodierung des empfangenen Signals ermittelt der Signalprozessor SPU auch die Bitfehlerrate und bestimmt daraus eine Qualitätsinformation. Die Funksteuereinrichtung RTC sammelt die Qualitätsinformation des empfangenen Signals und die Empfangsfeldstärken und bildet deren Durchschnittswerte. Diese für die Gesprächsübergabeentscheidung wichtigen Daten werden getrennt von den Nutzdaten zum Verbindungskonzentrator LCU weitergegeben und in einem eigenen Signalisierungskanal zur Feststationssteuereinrichtung BSC (vgl. Fig. 2) übertragen.

Zur Erzeugung eines zentralen Taktsignals ist in jeder Feststation außerdem eine interne Steuereinrichtung BCU (BTS-Central-Unit) vorgesehen.

Fig. 4 zeigt den prinzipiellen Aufbau einer Signalprozessoreinheit SPU. Der interne Datenbus der Feststation BTS setzt sich zusammen aus einem ersten Datenbus 301, der die über die A_{bis}-Schnittstelle ankommenden Datensignale führt und einem zweiten Datenbus 302 auf dem die über die A_{bis}-Schnittstelle abgehenden Daten geführt sind. Ein in der Signalprozessoreinheit SPU angeordneter Koder 304 steuert ein erstes Interface 303 so, daß die jeweils für einen Funkkanal bestimmten Daten vom internen Datenbus 301 übernommen werden. Die übernommenen Daten werden vom Koder 304 entsprechend dem jeweiligen Funkkanal, d.h. entsprechend dem Zeitschlitz, in dem sie gesendet werden sollen, in einem ersten Speicher 305 zwischengespeichert. Hierzu werden die immer noch im TRAU-Rahmen eingebundenen Nutzdaten extrahiert. Die 260 Bits einer 20 ms-Sprachprobe werden vom Koder 304 mit zusätzlichen Bits zur Fehlererkennung versehen und durch eine Faltungskodierung auf insgesamt 456 Bit erweitert, wodurch eine große Sicherheit gegen Übertragungsfehler gegeben ist. Aus diesen 456 Bits werden acht Teilblöcke zu je 57 Bit gebildet. In jedem Zeitschlitz werden jeweils ein Teilblock eines TRAU-Rahmens und ein entsprechender Teilblock des jeweils folgenden TRAU-Rahmens übertragen, so daß nach jeweils acht TDM-Rahmen insgesamt zwei TRAU-Rahmen übertragen werden. Durch diese Verschachtelung (Interleaving) sind die Brutto-Bits einer 20 ms-Sprachprobe auf acht aufeinanderfolgenden TDMA-Rahmen verteilt, so daß das Signal weniger anfällig für kurze Störungen wird, die dadurch entstehende Verzögerung der Übertragung jedoch nicht zu groß wird. In ähnlicher Weise werden auch Signalisierungsdaten, die eine Netto-Länge von 184 Bits aufweisen, ebenfalls mit einer Brutto-Länge von 456 Bits übertragen.

Zur Bildung des Zeitschlitzsignales fügt der Koder zwischen den zu übertragenenden Teilblöcken mit je 57 Bit noch eine Trainingssequenz, die ein bestimmtes Bitmuster enthält von 26 Bits sowie jeweils zwei weitere Signalisierungsbits (Stealing Flags) und zu Beginn und Ende des Zeitschlitzsignals noch drei Anfangs- und Endbits hinzu. Der auf diese Weise für jeden der acht Zeitschlitze gebildete Datenblock von jeweils 148 Bit wird vom Koder 304 zeitgerecht zum Sendeteil TXU geschickt.

Die jeweils vom Empfangsteil RXU ins Basisband umgesetzten Empfangssignale werden in einem Entzerrer 306 für jedes zu dekodierende Bit in Abtastwerte umgesetzt. Ein Dekoder 307 berechnet aus diesen Abtastwerten für jeden Zeitschlitz die empfangen Datenblöcke, entschachtelt (Deinterleaving) die Teildatenblöcke und setzt sie wieder zu einem TRAU-Rahmen zusammen. Zur zeitgerechten Absendung dieser TRAU-Rahmen über eine zweite Schnittstellensteuerung 309 werden die jeweils errechneten TRAU-Rahmen in einem zweiten Speicher 308 zwischengespeichert.

Bestimmte Kommandos, die zur Mobilfunkstation übertragen werden, sind sogenannte transparente Daten, d.h. die Feststation überträgt diese Daten zur Mobilstation ohne eine Auswertung dieser Daten vorzunehmen. Ein solches transparentes Kommando ist auch das "Handover Command", das von der Feststationssteuereinrichtung BSC zur Mobilstation geschickt wird, um die Mobilstation anzuweisen die Übertragung auf einen anderen Funkkanal, nämlich in einer anderen Funkzelle fortzuführen. Der Aufbau des "Handover Command" ist in der GSM-Recommendation 04.08, Kapitel 9.1.14, festgelegt. Anhand eines bestimmten Bitmusters an den entsprechenden Stellen im "Handover Command", kann das "Handover Command" eindeutig von anderen Steuerbefehlen unterschieden werden. So weist beispielsweise das zweite Byte, das den "Message type" angibt die Bitfolge "0010111" auf. Das "Handover Command" enthält desweiteren für die Mobilstation wichtige Daten, wie beispielsweise den zu verwendenden Funkkanal.

Im Ausführungsbeispiel ist der Koder 304 so ausgestaltet, daß er ein zu sendendes "Handover Command" anhand der charakteristischen Bitfolge erkennen kann. Der Koder 304 ist weiterhin so ausgestaltet, daß er, sobald er ein "Handover Command" für einen bestimmten Funkkanal, d.h. für einen bestimmten Zeitschlitz erkannt hat, die Nummer dieses Zeitschlitzes an den Dekoder 307 übergibt. Der Dekoder 307 ist seinerseits im Ausführungsbeispiel so ausgestaltet, daß er jedes Mal, wenn an die Schnittstelle 309 ein empfangener TRAU-Rahmen aus dem zweiten Speicher 308 zu übergeben wäre, anstelle dessen den im ersten Speicher 305 zwischengespeicherten Rahmen des von der Feststationssteuereinrichtung BSC empfangenen TRAU-Rahmen verwendet.

Auf diese Weise wird also ab Erkennung eines "Handover Command" anstelle der für den betreffenden Funkkanal von dem mobilen Teilnehmer empfangenen TRAU-Rahmen, die von der Feststationssteuereinrichtung BSC kommenden, für den mobilen Teilnehmer bestimmten TRAU-Rahmen in Richtung zur Feststationssteuereinrichtung BSC zurückgesendet. Andere Kriterien zum Anstoß dieser Prozeduren sind z.B. die Auswertung der von Signalen der beweglichen Funkstation empfangenen Signalen insbesondere nach Inhalt, Empfangspegel oder Empfangsqualität.

Bei Anforderung einer Gesprächsübergabe durch ihre Feststationssteuereinrichtung BSC wählt die verbindungsübernehmende Feststation einen freien Funkkanal aus und wartet darauf, daß sich die bewegliche Teilnehmerstation auf diesem Funkkanal meldet. Im Ausführungsbeispiel ist der Dekoder 307 so ausgestaltet, daß er ab der Bereitstellung eines neuen Funkkanals für eine Gesprächsübergabe bis zur Erkennung eines "Handover Zugriffs" (Handover access) der Mobilstation alle für diesen Funkkanal vom Koder 304 empfangenen TRAU-Rahmen zu der zugehörigen Feststationssteuereinrichtung BSC zurückschickt. Sobald vom Dekoder 307 ein gültiger Zugriff auf diesen Funkkanal erkannt wird, werden in herkömmlicher Weise die von der beweglichen Teilnehmerstation empfangenen Daten in TRAU-Rahmen zur Feststationssteuereinrichtung gesendet. Auf diese Weise wird somit der für einen bestimmten Funkkanal von einer Feststationssteuereinrichtung kommende Datenstrom anstelle von (noch nicht) von einer Mobilstation empfangenen Daten zur Feststationssteuereinrichtung zurückgesendet.

Im folgenden wird nun das Zusammenwirken der geschilderten Ausgestaltungen der Feststationen und einer jeweils beteiligten Koppelanordnung für den Fall einer Gesprächsübergabe beschrieben. Die Mobilstation mißt fortlaufend den Pegel und die Qualität der Signale, die von ihrer eigenen Feststation als auch von allen benachbarten Feststationen empfangen werden. Die ausgewerteten Daten werden von der Mobilstation der Feststationssteuereinrichtung BSC mitgeteilt. Unabhängig davon mißt auch die Feststation BTS Pegel und Empfangsqualität der Mobilstationen, die dann der jeweiligen Feststationssteuereinrichtung BSC übermittelt werden. Darüberhinaus ist im GSM-System auch vorgesehen, die Entfernung der Mobilstation von der Feststation zu messen. In beiden Fällen verarbeitet die Feststationssteuereinrichtung die Daten und entscheidet, ob eine Gesprächsübergabe durchgeführt werden soll oder nicht. Soll die Gesprächsübergabe erfolgen, berechnet die jeweilige Feststationssteuereinrichtung BSC die bevorzugte Feststation an die die Gesprächsübergabe erfolgen soll.

Je nachdem, an welcher Feststationssteuereinrichtung die verbindungsabgebende Feststation und die verbindunsübernehmende Feststation angeschlossen sind, gibt es in dem beschriebenen Mobilfunknetz unterschiedliche Prozeduren bei der Gesprächsübergabe. Sind verbindungsabgebende Feststation und verbindungsübernehmende Feststation an der gleichen Feststationssteuereinrichtung angeschlossen wie z.B. die Feststationen 10 und 11 in Fig. 2, so wird dies als "Intra BSC Handover" bezeichnet. An der Gesprächsübergabe ist nur das in der gemeinsamen Feststationssteuereinrichtung 6 vorgesehene Koppelfeld beteiligt. Bei einer Gesprächsübergabe, bei der die verbindungsabgebende Feststation (z.B. BTS 10) und die verbindungsübernehmende Feststation (z.B. BTS 12) an verschiedenen Feststationssteuereinrichtungen (z.B. BCE 6 bzw. BCE 7) angeschlossen sind, erfolgt die Gesprächsübergabe unter Beteiligung der Funkvermittlungsstelle (MSC 2) als sogenannter "Inter BSC Handover". Hierbei sind noch die Fälle zu unterscheiden, bei denen die beteiligten Feststationssteuereinrichtungen BSC an der gleichen Funkvermittlungsstelle MSC angeschlossen sind und bei denen die Feststationssteuereinrichtungen BSC an zwei verschiedenen Funkvermittlungsstellen MSC angeschlossen sind (beispielsweise eine Gesprächsübergabe von der Feststation 12 auf die Feststation 14 in Fig. 2). Hierbei wird die Verbindung über beide Funkvermittlungsstellen (MSC 2 und MSC 3) geführt.

Stellvertretend für alle genannten Gesprächsübergaben wird im folgenden eine Gesprächsübergabe unter Beteiligung nur einer Funkvermittlungsstelle MSC von einer Feststation BTS-A auf eine Feststation BTS-B beschrieben.

Hierbei wird jede Phase der Gesprächsübergabe anhand der Figuren 5a - 5f beschrieben, wobei zur besseren Übersicht nur die Verbindungswege innerhalb eines Koppelfeldes SW (switch) bzw. die Übertragungsstrecken gezeichnet sind, die zu der jeweiligen Phase der Gesprächsübergabe vom Mobilfunksystem bereitgestellt sind, bzw. auch tatsächlich benötigt werden. Der Übersichtlichkeit wegen sind alle beschriebenen notwendigen Einrichtungen wie Transcodiereinrichtung TCE, Koppelfeld in der Feststationsteuereinrichtung BSC, Verbindungskonzentrator LCU usw., als auch die Kanäle, auf denen die Signalisierung zwischen den Stationen ausgesteuert wird, weggelassen.

In den Figuren 5a - 5f sind die Koppelmittel zur Rückkoppelung eines von einer Feststation, von ihren zugeordneten Feststationssteuereinrichtung empfangenen, für einen bestimmten beweglichen Teilnehmer bestimmten Datenstroms auf den jeweils paarweise zugeordneten Rückkanal von der Feststation zu ihrer Feststationssteuereinrichtung symbolisch durch einen Umschalter CD (coupling device) dargestellt.

Figur 5a zeigt eine bestehende Verbindung von einem Netzteilnehmer über eine Funkvermittlungsstelle MSC, eine Feststationssteuereinrichtung BSC-A und eine Feststation BTS-A zu einem beweglichen Teilnehmer MS. Sobald die Feststationssteuereinrichtung BSC eine Gesprächsübergabe einleiten will, schickt sie ein entsprechendes Kommando "Handover required" an ihre Funkvermittlungsstelle MSC (Fig. 5b).

In der Meldung "Handover required" ist eine Liste der Feststationen enthalten, an die die Gesprächsübergabe erfolgen soll. Durch die entsprechende Funkvermittlungsstelle MSC wird zunächst ermittelt, über welche Feststationssteuereinrichtung BSC die für die Gesprächsübergabe bevorzugte verbindungsübernehmende Feststation BTS ansprechbar ist. An diese Feststationssteuereinrichtung BSC-B erfolgt die Anforderung einer Gesprächsübergabe durch einen Befehl "Handover request" (Fig. 5c).

In der gesprächsübernehmenden Feststationssteuereinrichtung BSC-B wird daraufhin ein freier Kanal in der verbindungsübernehmenden Feststation BTS-B gesucht und für die Gesprächsübergabe reserviert. Das diesem neuen ausgewählten Funkkanal zugeordnete Koppelmittel CD wird nun so geschaltet, daß ein auf diesem Kanal an der verbindungsübernehmenden Feststation BTS-B von der verbindungsübernehmenden Feststationseinrichtung BSC-B ankommendes Signal zur verbindungsübernehmenden Feststationssteuereinrichtung BSC-B zurückgeschickt wird. Mit der Reservierung des Funkkanals an der verbindungsübernehmenden Feststation BTS-B sendet die verbindungsübernehmende Feststationssteuereinrichtung BSC-B einen Bestätigungsbefehl" Handover request acknowledge" zur Funkvermittlungsstelle MSC zurück (Fig. 5d).

Mit Empfang der Bestätigung "Handover request acknowledge" wird vom MSC die Übertragungsstrecke zur verbindungsübernehmenden Feststation BTS-B aufgebaut (Fig. 5e).

Außerdem wird in der Funkvermittlungsstelle MSC die Gesprächsübergabe durch einen entsprechenden Schaltvorgang im Koppelfeld SW vorbereitet. Hierzu wird die ursprungliche Verbindung im Koppelfeld, mit der das vom beweglichen Teilnehmer MS stammende Signal zum Netz-Teilnehmer weitergeleitet wurde, aufgehoben und statt dessen das vom beweglichen Teilnehmer empfangene Signal über das Koppelfeld SW auf den vorbereiteten Kanal zur verbindungsübernehmenden Feststation BTS-B geleitet. Der Empfangszweig des vorbereiteten Funkkanals wird zum Netz-Teilnehmer weitergeleitet. Durch die vorherige Schaltung des Koppelmittels CD in der verbindungsübernehmenden Feststation BTS-B wird auf diese Weise das vom beweglichen Teilnehmer MS kommende Signal, bevor es zum Netzteilnehmer geschickt wird, zunächst über den vorbereiteten Verbindungsweg im Koppelfeld zu der verbindungsübernehmenden Feststation BTS-B geleitet, und durch das geschaltete Koppelelement CD zum Koppelfeld SW der Funkvermittlungsstelle MSC zurückgeleitet (Fig. 5f).

Wegen der Durchschleifung des Datenstroms ist somit bis zum Umschaltvorgang selbst eine ständige Verbindung zwischen den Teilnehmern sichergestellt. Da die Schaltzeiten innerhalb des Koppelfeldes SW sehr kurz sind, können bei einer entsprechenden Umschaltung des Koppelfeldes SW kaum Informationen verloren gehen. Wesentlich an dem gesprächsübergabevorbereitenden Schaltvorgang im Koppelfeld SW ist, daß die Bildung der Schleife durch das Koppelmittel CD in der verbindungsübernehmenden Feststation abgeschlossen ist, bevor die beschriebene Umschaltung im Koppelfeld SW der Funkvermittlungsstelle MSC erfolgt. Sobald diese Voraussetzungen erfüllt sind, ist der tatsächliche Zeitpunkt, an dem die Umschaltung des Koppelfeldes SW erfolgt ohne Belang. Selbst längere Verzögerungszeiten zwischen Eintreffen des Schaltbefehls und Ausführung des Schaltbefehls führen wegen der ständigen Verbindung der Teilnehmer zu keinen spürbaren Unterbrechungen.

Nachdem die beschriebene Umschaltung des Koppelfeldes der Funkvermittlungsstelle MSC erfolgt ist, sendet die Funkvermittlungsstelle den Befehl "Handover Command" zur verbindungsabgebenden Feststationssteuereinrichtung BSC-A (Fig. 5g). Wie bereits beschrieben, wird dieser Befehl zur Feststation weitergegeben und zur beweglichen Teilnehmerstation MS gesendet.

Wie ebenfalls bereits beschrieben, wird durch die Dekodierung des Befehls "Handover Command" in der Feststation BTS-A, die für den jeweiligen beweglichen Teilnehmer empfangenen Daten zur Feststationssteuereinrichtung BSC-A zurückgeleitet. Durch den Befehl "Handover Command" wechselt die bewegliche Teilnehmerstation MS auf den neuen Funkkanal der verbindungsübernehmenden Feststation BSC-B. Mit dem Zugriff der beweglichen Teilnehmerstation auf die verbindungsübernehmende Feststation BSC-B wird, wie ebenfalls schon beschrieben, die Kopplung zwischen dem ankommenden und dem abgehenden Datenstrom in der Feststation aufgelöst, so daß der ankommende Datenstrom über den Sendeteil TX der verbindungsübernehmenden Feststation zur beweglichen Teilnehmerstation MS gesendet wird und der von der beweglichen Teilnehmerstation MS stammende Datenstrom über den Empfänger RX in Richtung Funkvermittlungsstelle MSC gesendet wird (Fig. 5h).

Nunmehr ist durch das Koppelmittel CD in der verbindungsabgebenden Feststation BTS-A die Schleife vom Netz-Teilnehmer zur verbindungsabgebenden Feststation hin und zurück geschlossen, wobei das an der verbindungsabgebenden Feststation durchgeschleifte Signal über die immer noch bestehende gesprächsübergabevorbereitende Schaltung des Koppelfeldes SW der Funkvermittlungsstelle MSC zur verbindungsübernehmenden Feststation BTS-B geleitet wird. Auf diese Weise ist die von den Teilnehmern wahrnehmbare Verbindungsunterbrechung während der Gesprächsübergabe auf dem Funkübertragungsweg beschränkt auf die Zeit zwischen der Aufforderung der beweglichen Teilnehmerstation zu dem Funkkanalwechsel und dem Zugriff der beweglichen Teilnehmerstation an der verbindungsübernehmenden Feststation, weil auf die beschriebene Weise während der Gesprächsübergabe im Koppelfeld SW selbst keine Schaltvorgänge notwendig sind.

Nach einer erfolgreichen Gesprächsübergabe sendet die verbindungsübernehmende Feststationssteuereinrichtung BSC-B eine Bestätigung "Handover complete" zur Funkvermittlungsstelle MSC. Aufgrund dieses Befehls wird in der Funkvermittlungsstelle MSC nun der endgültige Verbindungsweg für beide Gesprächsrichtungen vom Netzteilnehmer zur verbindungsübernehmenden Feststation BSC-B und zurückgeschaltet. Wegen der noch immer bestehenden Brückenschaltung des Koppelelementes in der verbindungsabgebenden Feststation BTS-A ist der Zeitpunkt, zu dem der Schaltvorgang im Koppelfeld SW der Funkvermittlungsstelle ausgeführt wird, wieder ohne Belang. Der Umschaltvorgang selbst erfordert wiederum nur sehr kurze Schaltzeiten, so daß die beiden Teilnehmer von diesem Schaltvorgang kaum etwas bemerken.

Durch die Bestätigung des erfolgreichen Handovers "Handover complete" löst die Funkvermittlungsstelle MSC den ursprünglichen Verbindungsweg zur verbindungsabgebenden Feststationssteuereinrichtung BSC-A und diese ihren Verbindungsweg zur verbindungsabgebenden Feststation BTS-A auf (Fig. 5j). Die Gesprächsübergabe ist damit erfolgreich abgeschlossen.

Durch die Verwendung von Koppelmitteln zwischen dem Koppelfeld der Funkvermittlungsstelle und der beweglichen Teilnehmerstation ist es möglich, den Umschaltvorgang des Koppelfeldes SW während einer Gesprächsübergabe in einen Umschaltvorgang vor der Gesprächsübergabe und einen Umschaltvorgang nach der Gesprächsübergabe aufzuteilen. Da der Umschaltvorgang innerhalb eines Koppelfeldes SW selbst verzögerungsfrei durchgeführt werden kann, entstehen durch die Schaltvorgänge selbst praktisch keine Unterbrechungen. Dabei ist es gleichgültig, ob zur Führung des Datenstroms über beide Feststationen wie vorstehend beschrieben, das von der verbindungsabgebenden Feststation kommende Datensignal über das Koppelfeld zur verbindungsübernehmenden Feststation geschickt wird, oder das von der verbindungsübernehmenden Feststation kommende Datensignal zur verbindungsabgebenden Feststation geschickt wird.

## Patentansprüche

1. Mobilfunksystem mit folgenden Merkmalen:
a) eine Reihe von Feststationen (FS, BTS) mit Funkverbindungseinrichtungen (TX, RX) zu Mobilstationen (MS);
b) eine oder mehrere Vermittlungseinrichtungen (SW, MSC) mit Koppelanordnungen zum Verbindungsaufbau zwischen Teilnehmern, darunter wenigstens einer aktiven Mobilstation;
c) ein Verbindungsnetz (FN, GSM, PSTN, ISDN) mit Verbindungen zu den Feststationen (FS, BTS) und den Vermittlungseinrichtungen (SW, MSC);
d) Verbindungsübergabeeinrichtungen, um die Verbindungsübergabe einer jeweils aktiven Mobilstation zwischen einer ersten und zweiten Feststation (FS1, FS2) zu bewerkstelligen;
dadurch gekennzeichnet, daß
e) das System Koppeleinrichtungen (CD) und Steuereinrichtungen (Dₑₜ, SPU) umfaßt, die für folgenden Betrieb eingerichtet sind:
e.1) zur Vorbereitung der Verbindungsübergabe wird als erster Schritt eine erste Umkehrschleife (Sk2, Sg2) zwischen Vermittlungseinrichtung (SW) und zweiter Feststation (FS2) gebildet;
e.2) als zweiter Schritt wird die Vermittlungseinrichtung (SW) intern hinsichtlich einer ersten Übertragungsrichtung (SFT) umgeschaltet, so daß Gespräche oder Daten auf der Umkehrschleife (Sₖ₂, S_{g2}) von der zweiten Feststation (FS2) zur Vermittlungseinrichtung (SW) rückübertragen werden, um auf dem bisherigen Weg zur ersten Feststation (FS1) und zur Mobilstation (MS) zu gelangen;
e.3) als dritter Schritt wird eine zweite Umkehrschleife (Sₖ₁, S_{g1}) zwischen erster Feststation (FS1) und Vermittlungseinrichtung (SW) gebildet und die erste Umkehrschleife (Sₖ₂, S_{g2}) aufgetrennt, um die erste Übertragungsrichtung (SFT) auf neuem Wege zur Mobilstation zu übertragen und die zweite Übertragungsrichtung (SFR) auf der zweiten Umkehrschleife (Sk1, Sg1) zur Vermittlungseinrichtung (SW) zurückzuübertragen und dann auf dem zugehörigen Trennzweig (Sg2) der ersten Umkehrschleife zur zweiten Feststation (FS2) gelangen zu lassen;
e.4) als vierter Schritt wird die Vermittlungseinrichtung (SW) intern hinsichtlich der zweiten Übertragungseinrichtung (SFR) umgeschaltet, so daß Gespräche oder Daten zwischen Vermittlungseinrichtung (SW), zweiter Feststation (FS2) und Mobilstation (MS) nur noch über den neuen Weg laufen.

2. Mobilfunksystem nach Anspruch 1,
dadurch gekennzeichnet, daß die Steuereinrichtungen (Dₑₜ, SPU) zur Detektion eines Verbindungsübergabewunsches ausgebildet sind, der als Steuersignal (hand over required) von der ersten Feststation (FS1, BTS-A) an die Vermittlungseinrichtung (SW) übertragen wird.

3. Mobilfunksystem nach Anspruch 2,
dadurch gekennzeichnet, daß die Vermittlungseinrichtung (SW) zur Aussendung eines Aufforderungssignals (hand over request) an die zweite Feststation (FS2, BTS-B) ausgebildet ist, und daß die zweite Feststation Steuermittel umfaßt, um daraufhin die erste Umkehrschleife (Sₖ₂, S_{g2}) vorzubereiten.

4. Mobilfunksystem nach Anspruch 3,
dadurch gekennzeichnet, daß die Vermittlungseinrichtung (SW) zur Feststellung eines Bestätigungssignals (hand over request acknowledged) ausgebildet ist, um die erste Umkehrschleife (Sₖ₂, S_{g2}) zu schalten.

5. Mobilfunksystem nach Anspruch 3 oder 4,
dadurch gekennzeichnet, daß die Vermittlungseinrichtung (SW) zur Abgabe eines Umschaltsignals (hand over command) an die erste Feststation (FS1) ausgebildet ist, um die zweite Umkehrschleife zu schließen und die erste Umkehrschleife zu öffnen.

6. Mobilfunksystem nach Anspruch 5,
dadurch gekennzeichnet, daß die erste Feststation (FS2, BTS-B) zur Aussendung eines zweiten Bestätigungssignals (hand over complete) ausgebildet ist, um die interne Umschaltung der Vermittlungseinrichtung (SW) nur noch zu der zweiten Feststation herbeizuführen.

7. Mobilfunksystem nach Anspruch 6,
dadurch gekennzeichnet, daß die erste Feststation (FS1, BTS-A) zum Öffnen der zweiten Umkehrschleife ausgebildet ist, wenn diese vom Datenstrom abgeschaltet ist.

## Claims

1. Mobile radio system having the following features:
a) a series of fixed stations (FS,BTS) having radio connecting devices (TX,RX) to mobile stations (MS);
b) one or more switching centres (SW,MSC) having coupling arrangements for setting up connections between subscribers, including at least one active mobile station;
c) a connecting network (FN,GSM,PSTN,ISDN) with connections to the fixed stations (FS,BTS) and to the switching centres (SW,MSC);
d) connection handover devices in order to hand over the connection from in each case one active mobile station between a first fixed station and a second fixed station (FS1,FS2);
characterized in that
e) the system comprises coupling devices (CD) and control devices (Dₑₜ,SPU) which are set up for the following mode:
e.1) the first step in handing over a connection is to form a first reversing loop (Sk2,Sg2) between the switching centre (SW) and the second fixed station (FS2);
e.2) as the second step, the switching centre (SW) is switched internally with regard to a first transmission direction (SFT), so that voice or data are transmitted back on the reversing loop (Sₖ₂,S_{g2}) from the second fixed station (FS2) to the switching centre (SW) in order to pass on the previous route to the first fixed station (FS1) and to the mobile station (MS);
e.3) as the third step, a second reversing loop (Sₖ₁,S_{g1}) is formed between the first fixed station (FS1) and the switching centre (SW), and the first reversing loop (Sₖ₂,S_{g2}) is disconnected in order to transmit the first transmission direction (SFT) on the new route to the mobile station and to transmit the second transmission direction (SFR) back on the second reversing loop (Sk1,Sg1) to the switching centre (SW) and then to be passed on the associated disconnecting path (Sg2) of the first reversing loop to the second fixed station (FS2);
e.4) as the fourth step, the switching centre (SW) is switched internally with regard to the second transmission device (SFR), so that voice or data still run via only the new path between the switching centre (SW), the second fixed station (FS2) and the mobile station (MS).

2. Mobile radio system according to Claim 1, characterized in that the control devices (Dₑₜ,SPU) are designed to detect a wish to hand over a connection, which wish is transmitted as a control signal (handover required) from the first fixed station (FS1, BTS-A) to the switching centre (SW).

3. Mobile radio system according to Claim 2, characterized in that the switching centre (SW) is designed to transmit a request signal (handover request) to the second fixed station (FS2,BTS-B), and in that the second fixed station comprises control means in order then to prepare the first reversing loop (Sₖ₂,S_{g2}).

4. Mobile radio system according to Claim 3, characterized in that the switching centre (SW) is designed to confirm an acknowledgement signal (handover request acknowledged), in order to switch the first reversing loop (Sₖ₂,S_{g2}).

5. Mobile radio system according to Claim 3 or 4, characterized in that the switching centre (SW) is designed to emit a handover command to the first fixed station (FS1) in order to close the second reversing loop and to open the first reversing loop.

6. Mobile radio system according to Claim 5, characterized in that the second fixed station (FS2,BTS-B) is designed to transmit a second acknowledgement signal (handover complete) in order to cause the switching centre (SW) to be switched internally only to the second fixed station.

7. Mobile radio system according to Claim 6, characterized in that the first fixed station (FS1,BTS-A) is designed to open the second reversing loop when it is disconnected from the data stream.

## Revendications

1. Système de radiocommunication mobile présentant les caractéristiques suivantes :
a) une série de stations fixes (FS, BTS) comprenant des dispositifs de communication radioélectrique (TX, RX) vers les stations mobiles (MS) ;
b) un ou plusieurs dispositifs de commutation (SW, MSC) comprenant des réseaux de connexion destinés à établir une communication entre des abonnés, au moins l'un d'entre eux étant une station mobile active ;
c) un réseau de communication (FN, GSM, RTCP, RNIS) comprenant des liaisons vers les stations fixes (FS, BTS) et les dispositifs de commutation (SW, MSC) ;
d) des dispositifs de transfert des communications destinés à réaliser le transfert de la communication d'une station mobile active entre une première et une deuxième station fixe (FS1, FS2) ;
caractérisé en ce que
e) le système comprend des dispositifs de connexion (CD) et des dispositifs de commande (Dₑₜ, SPU) qui sont réglés pour le fonctionnement suivant :
e.1) pour la préparation du transfert de la communication, la première étape consiste à former une première boucle de retour (Sk2, Sg2) entre le dispositif de commutation (SW) et la deuxième station fixe (FS2) ;
e.2) la deuxième étape consiste à commuter le dispositif de commutation (SW) en interne du point de vue d'un premier sens de transmission (SFT) de manière à ce que les paroles ou les données soient retournées sur la boucle de retour (Sk2, Sg2) de la deuxième station fixe (FS2) vers le dispositif de commutation (SW) pour atteindre la première station fixe (FS1) et la station mobile (MS) en suivant le chemin utilisé jusqu'à présent ;
e.3) la troisième étape consiste à former une deuxième boucle de retour (Sk1, Sg1) entre la première station fixe (FS1) et le dispositif de commutation (SW) et à interrompre la première boucle de retour (Sk2, Sg2) afin de transmettre le premier sens de transmission (SFT) sur le nouveau chemin vers la station mobile et de retourner le deuxième sens de transmission (SFR) vers le dispositif de commutation (SW) sur la deuxième boucle de retour (Sk1, Sg1) et ensuite laisser la première boucle de retour atteindre la deuxième station fixe (FS2) sur la branche de séparation correspondante (Sg2);
e.4) la quatrième étape consiste à commuter le dispositif de commutation (SW) en interne du point de vue du deuxième sens de transmission (SFR) de manière à ce que les paroles ou les données entre le dispositif de commutation (SW), la deuxième station fixe (FS2) et la station mobile (MS) ne passent plus que par le nouveau chemin.

2. Système de radiocommunication mobile selon la revendication 1, caractérisé en ce que les dispositifs de commande (Det, SPU) sont conçus pour la détection d'une demande de transfert de la communication qui est transmise sous la forme d'un signal de commande (demande de transfert) de la première station fixe (FS1, BTS-A) au dispositif de commutation (SW).

3. Système de radiocommunication mobile selon la revendication 2, caractérisé en ce que le dispositif de commutation (SW) est conçu pour émettre un signal de demande (demande de transfert) à la deuxième station fixe (FS2, BTS-B) et que la deuxième station fixe comprend des moyens de commande pour préparer là-dessus la première boucle de retour (Sk2, Sg2).

4. Système de radiocommunication mobile selon la revendication 3, caractérisé en ce que le dispositif de commutation (SW) est conçu pour détecter un signal de confirmation (demande de transfert reçue) pour commuter la première boucle de retour (Sk2, Sg2).

5. Système de radiocommunication mobile selon la revendication 3 ou 4, caractérisé en ce que le dispositif de commutation (SW) est conçu pour transmettre un signal de commutation (commande de transfert) à la première station fixe (FS1) pour fermer la deuxième boucle de retour et ouvrir la première boucle de retour.

6. Système de radiocommunication mobile selon la revendication 5, caractérisé en ce que la première station fixe (FS2, BTS-B) est conçue pour émettre un deuxième signal de confirmation (transfert terminé) pour n'acheminer la commutation interne du dispositif de commutation (SW) que vers la deuxième station fixe.

7. Système de radiocommunication mobile selon la revendication 6, caractérisé en ce que la première station fixe (FS1, BTS-A) est conçue pour ouvrir la deuxième boucle de retour lorsque celle-ci est déconnectée du flux des données.
